# FASCICULE DE BREVET EUROPEEN

(11) **EP 0 404 635 B1**
(45) Date de publication et mention de la délivrance du brevet: **13.09.1995**
(21) Numéro de dépôt: 90401618.5
(22) Date de dépôt: 12.06.1990
(51) Int. Cl.: H01S 3/094, H01S 3/042

(54) **Structure d'illumination d'un barreau laser, à sources optiques délocalisées**
Beleuchtungsstruktur eines Laserstabes mit delokalisierten optischen Quellen
Delocalised optical source illumination structure of a rod laser

(30) Priorité: 23.06.1989 FR 8908384
(43) Date de publication de la demande: 27.12.1990
(73) Titulaire: THOMSON-CSF, 75008 Paris (FR)
(72) Inventeur: Pocholle, Jean-Paul, F-92045 Paris la Défense (FR); Papuchon, Michel, F-92045 Paris la Défense (FR); Puech, Claude, F-92045 Paris la Défense (FR)
(74) Mandataire: Guérin, Michel

(56) Documents cités:
- EP-A- 0 138 411
- EP-A- 0 274 223
- DE-A- 2 844 129
- US-A- 4 713 822
- US-A- 4 794 615
- OPTICS LETTERS, vol. 13, no. 3, mars 1988, pages 204-206; M.K. REED et al.:"Diode-laser-array-pumped neodymium slab oscillators"
- APPLIED OPTICS, vol. 26, no. 16, 15 août 1987, pages 3177-3179; K. CHAN:"Multiple-pass laser-diode-pumped Nd: YAG amplifier: design"

## Description

### Structure d'illumination d'un barreau laser, à sources optiques délocalisées.

Le domaine de l'invention est celui des lasers de puissance pompés par des sources optiques cohérentes, telles que des diodes lasers.

Dans le type de structure concerné par l'invention, on utilise un mode de pompage transverse de cristaux solides dans lesquels se trouvent insérés des ions de terres rares, ces ions étant le siège de l'effet laser.

L'emploi du pompage résonnant réalisé à partir de diodes lasers présente plusieurs avantages, parmi lesquels l'obtention d'un meilleur rendement de conversion de l'énergie électrique en énergie optique, et la minimisation des effets thermiques au niveau du barreau. Cependant, les diodes lasers employées présentent typiquement des rendements de conversion optique/électrique qui n'excèdent pas en pratique 50 %. Il s'ensuit que, dans des opérations de pompage de barreaux lasers, il est nécessaire d'évacuer l'énergie électrique non convertie, qui se transforme en partie en chaleur au niveau de la jonction des diodes lasers.

Une configuration permettant d'évacuer les calories est fondée sur l'emploi de radiateurs composant l'embase des barrettes d'émission. Le niveau d'énergie devant être évacué est important dans le cas où l'on désire réaliser des lasers de puissance pompés à partir de diodes lasers. Ceci nécessite donc l'emploi de radiateurs encombrants qui viennent pénaliser le concepteur de tête laser en particulier lorsque l'on cherche à réaliser un pompage homogène de l'ensemble du barreau à partir de barrettes réparties autour de celui-ci.

On connaît une solution à ce problème, consistant à délocaliser la source de pompage (constituées par exemple de diodes lasers) et à employer une fibre optique multimode véhiculant vers le milieu actif l'intensité de pompage.

Cette solution ne garantit toutefois pas la meilleure homogénéité dans l'illumination du barreau laser, et suppose en outre l'utilisation d'éléments optiques discrets, coûteux et complexifiant l'opération de montage. Une telle solution est décrite dans le brevet US-A-4 713 822. Une autre méthode d'illumination d'un barreau laser par une source optique non cohérente est décrite dans le document DE-A-2 844 129. Une méthode similaire de pompage d'un amplificateur à fibre optique est décrite dans le document EP-A-0 138 411.

L'invention a pour objectif de fournir une nouvelle structure à sources optiques de pompage délocalisées, palliant ces inconvénients.

Plus précisément, un premier objectif de l'invention est de fournir une structure d'illumination d'un barreau laser permettant à la fois une bonne évacuation des calories dégagées par les sources optiques cohérentes de pompage, et une bonne homogénéité des opérations de pompage du barreau.

Un autre objectif de l'invention est de fournir une structure d'illumination permettant un couplage aisé, au sein d'un même ensemble, d'un module oscillateur et d'un module amplificateur.

Un objectif complémentaire de l'invention est de fournir une structure susceptible de former un ensemble rigide, aisément positionnable et déplaçable, notamment dans la cavité de pompage et/ou par rapport à un axe d'amplification lorsque la structure et le barreau sont utilisés en amplificateurs. Cet objectif permet de placer aisément l'émetteur laser dans des configurations spécifiques de fonctionnement ou d'émission, ainsi que d'offrir des fonctionnalités nouvelles d'homogénéisation de l'illumination du barreau, d'optimisation du barreau en multi-passages, ou encore, par exemple, de refroidissement du barreau par génération d'un flux hydrodynamique.

Ces objectifs, ainsi que d'autres qui apparaîtront par la suite, sont atteints à l'aide d'une structure d'illumination d'un barreau laser, notamment pour le pompage du barreau à partir d'au moins un jeu de sources optiques cohérentes, les sources optiques d'au moins un jeu de sources optiques étant disposées sur un même support délocalisé, et ladite structure comprenant des moyens réfléchissants de renvoi, vers le barreau, du faisceau d'illumination dudit jeu de sources optiques délocalisées.

La structure d'illumination selon l'invention est décrite dans la revendication 1. Différents modes de réalisation de l'invention sont décrits dans les revendications dépendantes.

En d'autres termes, l'optique de transfert de l'émission des sources optiques vers le barreau est constituée par des moyens réfléchissants, sous forme d'un bloc de verre ou de silice de forme prismatique.

Dans le cas d'un barreau de type prismatique, on peut prévoir que la structure coopère d'une part avec une paire de réflecteurs formant cavité de pompage, et d'autre part avec des moyens de renvoi dans le barreau, en au moins un second passage, du faisceau issu de ladite cavité. Il est également possible de prévoir que la structure comprend des moyens de déplacement translatif dudit ensemble rigide par rapport à la cavité de pompage, sensiblement dans le plan dudit barreau.

Dans ce cas, ledit barreau est monté préférentiellement solidaire audit bloc mobile. On peut alors en outre prévoir que ledit bloc mobile comprend des moyens de génération d'un flux hydrodynamique de refroidissement au niveau du barreau.

Dans tous les cas, il est avantageux que le support muni des sources optiques, les moyens de renvoi du faisceau d'illumination, et le barreau forment un ensemble rigide, ledit ensemble coopérant avec une paire de réflecteurs formant cavité laser.

Dans un mode de réalisation spécifique de l'invention, ledit barreau est taillé à l'angle de Brewster, ledit ensemble étant incliné par rapport aux axes des réflecteurs de la cavité de pompage.

Dans un autre mode de réalisation spécifique, la structure coopère avec une source de commande et/ou une diode laser de pompage longitudinal.

Il est également possible de réaliser une structure constituée de deux ensembles montés tête-bêche, chaque ensemble étant formé dudit support muni des sources optiques, des moyens réfléchissants de renvoi du faisceau optique, et du barreau, le premier ensemble formant oscillateur, et le second ensemble formant amplificateur.

D'autres caractéristiques et avantages de l'invention apparaîtront à la lecture de la description suivantes de mode de réalisation donnés à titre illustratif et non limitatif, et des dessins annexés dans lesquels :
- la figure 1 schématise une coupe d'une structure d'illumination tronconique
- la figure 2 est une vue en perspective d'un oscillateur comprenant la structure d'illumination de la figure 1 placée dans une cavité de pompage
- la figure 3 illustre l'utilisation d'une configuration "Brewster"
- la figure 4 est une vue en coupe illustrant l'utilisation d'une diode laser de pompage longitudinal en combinaison avec une structure d'illumination tronconique
- la figure 5 représente la combinaison de deux structures d'illumination pour former un oscillateur et un amplificateur
- la figure 6 schématise un montage d'oscillateur avec pompage symétrique au moyen de deux structures d'illumination
- la figure 7 représente un mode de réalisation d'une structure d'illumination prismatique selon l'invention, à déplacement de translation par rapport à la cavité de pompage
- la figure 8 illustre un mode de réalisation d'une structure d'illumination prismatique selon l'invention, avec oscillateur et amplificateur conjugués dans la même plaque.

Les figures représentent plusieurs modes de réalisation de lasers solides pompés par diodes lasers utilisant une optique de transfert du pompage vers le milieu d'amplification, à base d'une même surface réfléchissante.

Cette configuration a pour mérite de regrouper les diodes lasers de pompe sur une même plaque et d'éloigner celles-ci du milieu devant être pompé. Ceci présente l'avantage de pouvoir traiter les problèmes thermiques de la pompe d'une façon collective. L'aspect monolithique du couple optique de couplage-barreau permet de plus d'envisager un certain nombre de variantes présentées ci-après.

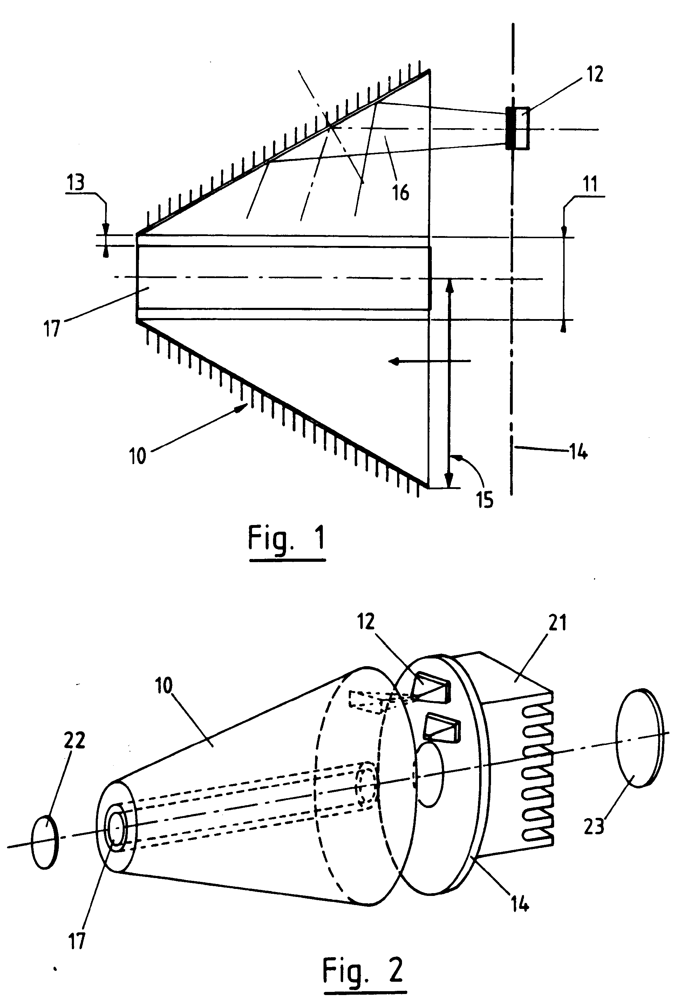

Dans le mode de réalisation non revendiqué représenté en fig 1, la mise en oeuvre de l'invention repose sur l'emploi des pièces optiques de forme conique 10 percées en leur centre 11. Chaque pièce optique 10 est avantageusement réalisée dans un matériau en verre ou en silice transparent à la longueur d'onde de l'onde de pompe émise par les diodes lasers 12 formant source de pompage. L'ouverture centrale 11 permet d'insérer un barreau laser 17 et le jeu 13 existant entre le barreau 17 et le diamètre du trou 11 peut être ajusté de façon à permettre l'écoulement d'un liquide de refroidissement dont le régime hydrodynamique peut être contrôlé. Un revêtement diélectrique, multidïélectrique ou métallique sur la partie conique 10 permet de réaliser la fonction de miroir. Le pompage dans ce cas est réparti sur une plaque 14 située au voisinage de la section droite de plus grande surface 15 présentée par la pièce conique optique 10 réalisant le transfert des faisceaux de pompe 16 vers le barreau laser. Ces diodes lasers 12 localisées sur une même surface 14 permettent un traitement spécifique de l'évacuation des calories en utilisant le concept de plaque de refroidissement et la disposition des diodes 12 est réalisée de telle manière que le pompage du barreau 17 présente la meilleure homogénéité.

Comme représenté en fig 2, la plaque support 14 des diodes de pompage 12 est munie d'un radiateur 21, deux miroirs 22, 23 formant la cavité de pompage. La cavité de pompage est indépendante de l'ensemble formé par le support 14 muni des sources optiques 12, le réflecteur 10 et le barreau 17. Le réflecteur tronconique 10 forme optique de couplage commune à l'ensemble de la pompe, et est inséré entre la plaque émissive constituée de l'ensemble des diodes lasers 12 et la partie optique de transfert 10.

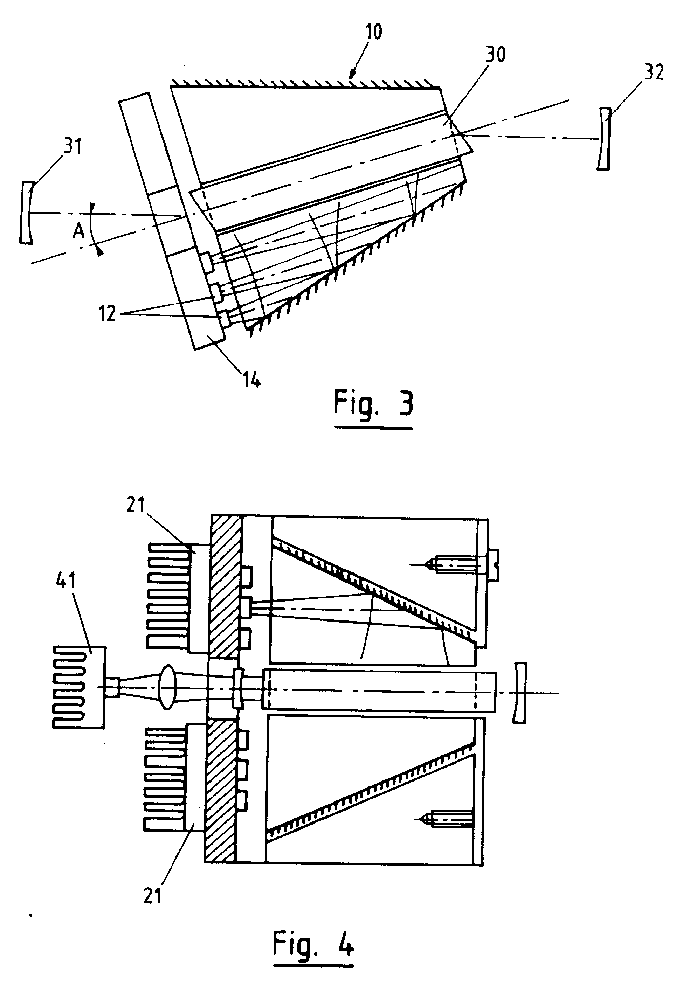

La figure 3 illustre une configuration adaptée au cas représenté par l'emploi d'un barreau laser 30 taillé à l'angle de Brewster, dans le but de minimiser les pertes à la réflexion sur chaque dioptre et de contrôler l'état de polarisation de l'onde optique générée dans le barreau 30. Dans ce cas l'ensemble rigide 12 + 30 + 14 + 10 est basculé d'un angle A entre les miroirs 31,32 de la cavité laser. La taille de l'optique de couplage présente la géométrie particulière adéquate à la configuration Brewster.

La configuration de la structure d'illumination peut être employée en utilisant un mode de pompage mixte. Dans ce cas, comme représenté en fig 4, une diode laser 41 de puissance est couplée à une extrémité du barreau. Cette diode réalise le pompage longitudinal et présente une caractéristique de faisceau ajustée à celle du mode de la cavité dans la partie du barreau qui lui est la plus proche. Cette pompe longitudinale peut être employée pour initier l'inversion de population ou pour accroître la stabilité du faisceau en imposant sur une partie du barreau un profil de gain s'ajustant à celui du mode de la cavité. Le cas échéant la diode laser 41 peut-être remplacée par un laser annexe de petite puissance mais stable en fréquence (Seeder), d'injection d'un signal de commande.

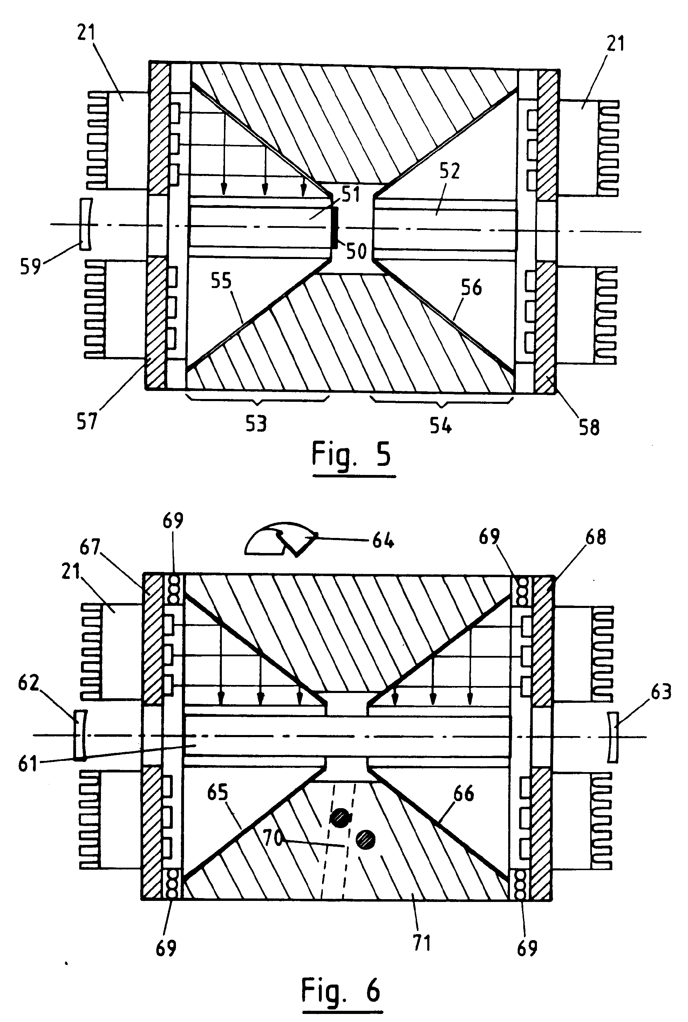

L'association de deux structures d'illumination permet de réaliser un montage constitué d'un oscillateur 53 et d'un amplificateur 54 (fig 5) ou d'un oscillateur unique avec un pompage symétrique (fig 6).

Les structures d'illuminations 55, 56; 65,66 sont montées têtes-bêche, de façon que les plaques-support 57,58; 67,68 des sources optiques soient disposées aux extrémités de l'ensemble.

Dans le cas de l'ensemble oscillateur 53 + amplificateur 54 (fig 5), chacun des modules 53,54 est muni d'un barreau laser distinct 51,52. Le barreau laser 51 de l'oscillateur est associé à un jeu de réflecteurs 50,59 formant la cavité laser. Les faces du barreau 52 sont traitées anti-reflets.

Dans le mode de réalisation de la figure 6, les réflecteurs 62, 63 de la cavité de pompage sont situées de part et d'autre du barreau 61. Dans ce cas, l'ensemble source ayant le caractère "monobloc" (barreau laser 61 + optique de couplage 65, 66 de la pompe) peut-être animé d'un mouvement de rotation 64. Cette mise en rotation du barreau permet de réaliser une homogénéisation du pompage et peut jouer un rôle facilitant au niveau de l'échange thermique et du refroidissement du barreau.

La rotation est autorisée en montant l'ensemble rigide sur les deux plaques support fixes 67,68, par l'intermédiaire des roulements à billes 69. Le refroidissement est généré par un flux traversant les cavité intérieures 60, et par exemple des buses d'injection ou d'évacuation 70 ménagées dans les structures de liaison 71 des optiques de couplage 65,66.

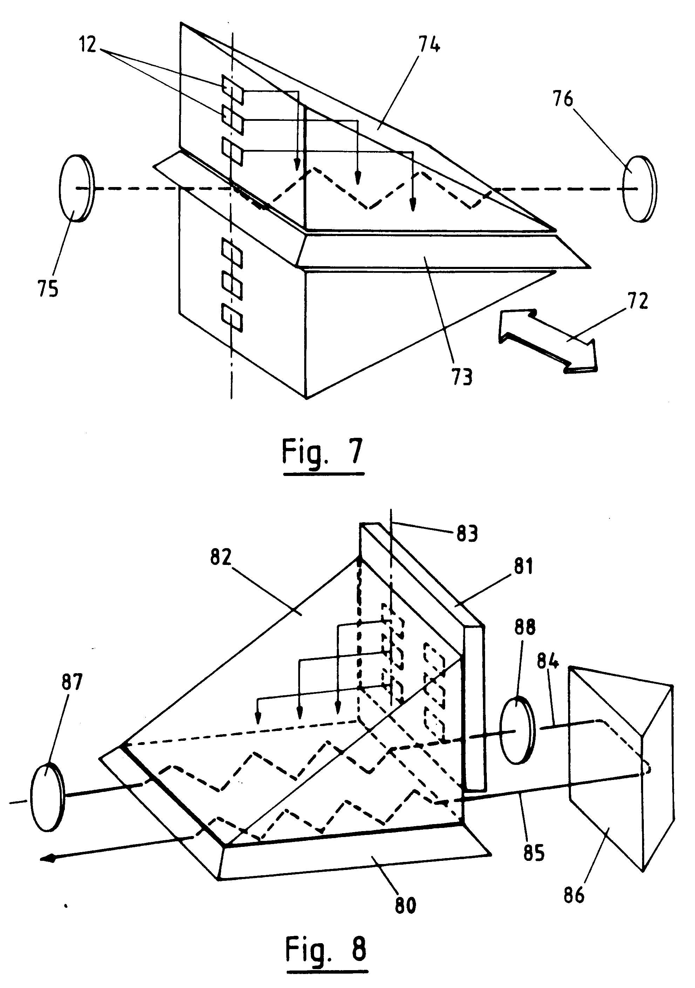

Un mode de réalisation de l'invention est représenté sur la figure 7. Le mouvement de rotation est remplacé dans ce cas par une translation 72 de la plaque laser 73 par rapport à l'optique de transfert de la pompe 74 et à la cavité définie entre les deux réflecteurs 75, 76, ce qui permet de minimiser les effets thermiques résiduels. Une seule condition gouverne l'emploi d'un tel déplacement : il est nécessaire que le milieu laser soit homogène et présente une section droite de dimension supérieure à celle du mode de la cavité.

Enfin comme illustré en figure 8 le concept d'oscillateur et d'amplificateur intégré sur une même plaque 80 peut-être mis en oeuvre à partir d'un pompage réparti transféré d'un ensemble de rubans lasers 83 disposé sur la plaque de pompe 81 vers le milieu laser 80 par l'intermédiaire d'une pièce optique 82 prismatique.

Ainsi, une première ligne 84 de traversée de la plaque 80 correspond à la mise en résonance de l'oscillateur, entre deux réflecteurs 87,88 et une seconde ligne 85, renvoyée par un prisme réflecteur 86, correspond à un étage d'amplification.

Le choix de la pente caractérisant l'inclinaison du dioptre et donc la loi de réflexion et la propagation des faisceaux de pompe, ainsi que le milieu optique de transfert caractérisé par son indice optique, permettent de réaliser un mode de pompage réparti pouvant être sélectif spatialement.

## Revendications

1. Structure d'illumination d'une plaque laser, notamment pour le pompage transverse de la plaque à partir d'au moins un jeu de sources optiques cohérentes, caractérisée en ce que les sources optiques (12) d'au moins un jeu de sources optiques sont disposées sur un même support délocalisé (81), qui est un plan perpendiculaire à la plaque (80), et en ce que ladite structure comprend des moyens réfléchissants (74 ; 82) de renvoi vers la plaque (73 ; 80) du faisceau d'illumination dudit jeu de sources optiques délocalisées, lesdits moyens de renvoi du faisceau d'illumination étant constitués par au moins une surface plane inclinée réfléchissante (82).

2. Structure selon la revendication 1, caractérisée en ce que ledit support délocalisé est un radiateur évacuant la chaleur (21), commun aux sources dudit jeu de sources optiques.

3. Structure selon la revendication 1, caractérisée en ce que le support (81) muni des sources optiques (12), les moyens de renvoi (82) du faisceau d'illumination, et la plaque (73, 80) forment un ensemble rigide, ledit ensemble coopérant avec une paire de réflecteurs (87, 88) formant cavité laser.

4. Structure selon la revendication 3, caractérisée en ce qu'elle coopère avec une source de commande et/ou une diode laser (41) de pompage longitudinal.

5. Structure selon l'une des revendications 1 à 4, caractérisée en ce qu'elle coopère d'une part avec une paire de réflecteurs (87, 88) formant cavité de pompage, et d'autre part avec des moyens (86) de renvoi dans la plaque, en au moins un second passage (85), du faisceau (84) issu de ladite cavité.

6. Structure selon l'une quelconque des revendications 1 à 5, caractérisée en ce qu'elle est constituée de deux ensembles montés côte à côte, chaque ensemble étant formé dudit support (81) muni des sources optiques (12), des moyens réfléchissants (82) de renvoi du faisceau optique, et de la plaque (80).

7. Structure selon la revendication 6, caractérisée en ce que le premier ensemble forme oscillateur, et le second ensemble forme amplificateur.

8. Structure selon la revendication 6, caractérisée en ce que les deux ensembles coopèrent avec une même plaque (80), de façon à former un oscillateur à pompage symétrique.

9. Structure selon la revendication 3 et l'une quelconque des revendications 4 à 8, caractérisée en ce qu'elle comprend des moyens de déplacement translatifs (72) dudit ensemble rigide par rapport à la cavité de pompage (75, 76), sensiblement dans le plan de la plaque (73, 80).

10. Structure selon la revendication 9, caractérisée en ce que ledit bloc mobile comprend des moyens de génération d'un flux hydrodynamique de refroidissement au niveau de la plaque (73, 80).

11. Structure selon la revendication 10, caractérisée en ce que ladite plaque est montée solidaire dudit bloc mobile.

12. Structure selon l'une quelconque des revendications 1 à 11, caractérisée en ce que lesdites sources optiques cohérentes (12) sont constituées par des diodes laser.

13. Structure selon l'une quelconque des revendications 1 à 12, caractérisée en ce que lesdits moyens réfléchissants de renvoi vers la plaque du faisceau d'illumination dudit jeu de sources optiques délocalisées sont constitués par un miroir à revêtement diélectrique et/ou métallique.

## Patentansprüche

1. Anordnung zur Beleuchtung einer Laserplatte, insbesondere für das transversale Pumpen der Platte ausgehend von wenigstens einem Satz von kohärenten Lichtquellen, dadurch gekennzeichnet, daß die Lichtquellen (12) wenigstens eines Lichtquellensatzes auf einem gleichen abgesetzten Träger (81) angeordnet sind, der eine zu der Platte (80) senkrechte Ebene ist, und daß die Anordnung reflektierende Mittel (74; 82) zur Umlenkung des Beleuchtungsbündels des Satzes von abgesetzten Lichtquellen zu der Platte (73; 80) enthält, wobei die Mittel zur Umlenkung des Beleuchtungsbündels durch wenigstens eine geneigte reflektierende ebene Fläche (82) gebildet sind.

2. Anordnung nach Anspruch 1, dadurch gekennzeichnet, daß der abgesetzte Träger ein die Wärme abführender Kühlkörper (21) ist, der den Quellen des Lichtquellensatzes gemeinsam ist.

3. Anordnung nach Anspruch 1, dadurch gekennzeichnet, daß der mit den Lichtquellen (12) versehene Träger (81), die Umlenkmittel (82) für das Beleuchtungsbündel und die Platte (73, 80) eine starre Baugruppe bilden, wobei die Baugruppe mit einem Paar von Reflektoren (87, 88) zusammenwirkt, die einen Laserhohlraum bilden.

4. Anordnung nach Anspruch 3, dadurch gekennzeichnet, daß sie mit einer Steuerquelle und/oder einer Laserdiode (41) für longitudinales Pumpen zusammenwirkt.

5. Anordnung nach einem der Ansprüche 1 bis 4, dadurch gekennzeichnet, daß sie einerseits mit einem Paar von Reflektoren (87, 88) zusammenwirkt, die einen Pumphohlraum bilden, und andererseits mit Mitteln (86), die das aus dem Hohlraum austretende Bündel (84) für wenigstens einen zweiten Durchgang (85) in die Platte zurückschicken.

6. Anordnung nach einem der Ansprüche 1 bis 5, dadurch gekennzeichnet, daß sie aus zwei nebeneinander montierten Baugruppen gebildet ist, wobei jede Baugruppe aus dem mit den Lichtquellen (12) ausgestatteten Träger (81), den reflektierenden Mitteln (82) zur Umlenkung des Lichtbündels und der Platte (80) gebildet ist.

7. Anordnung nach Anspruch 6, dadurch gekennzeichnet, daß die erste Baugruppe einen Oszillator und die zweite Baugruppe einen Verstärker bildet.

8. Anordnung nach Anspruch 6, dadurch gekennzeichnet, daß die beiden Baugruppen mit derselben Platte (80) derart zusammenwirken, daß ein Oszillator mit symmetrischem Pumpen gebildet wird.

9. Anordnung nach Anspruch 3 und einem der Ansprüche 4 bis 8, dadurch gekennzeichnet, daß sie Mittel (72) zur translatorischen Verstellung der starren Baugruppe in bezug auf den Pumphohlraum (75, 76) im wesentlichen in der Ebene der Platte (73, 80) aufweist.

10. Anordnung nach Anspruch 9, dadurch gekennzeichnet, daß der bewegliche Block Mittel zur Erzeugung einer hydrodynamischen Kühlströmung am Ort der Platte (73, 80) enthält.

11. Anordnung nach Anspruch 10, dadurch gekennzeichnet, daß die Platte mit dem beweglichen Block fest verbunden ist.

12. Anordnung nach einem der Ansprüche 1 bis 11, dadurch gekennzeichnet, daß die kohärenten Lichtquellen (12) durch Laserdioden gebildet sind.

13. Anordnung nach einem der Ansprüche 1 bis 12, dadurch gekennzeichnet, daß die reflektierenden Umlenkmittel, die das Beleuchtungsbündel des Satzes von abgesetzten Lichtquellen zu der Platte hin umlenken, durch einen Spiegel mit dielektrischer und/oder metallischer Beschichtung gebildet sind.

## Claims

1. Illumination structure for a laser plate, especially for transverse pumping of the plate from at least one set of coherent optical sources, characterized in that the optical sources (12) of at least one set of optical sources are arranged on the same delocalized support (81), which is a plane perpendicular to the plate (80), and in that the said structure comprises reflecting means (74; 82) for sending back the beam of illumination from the said set of delocalized optical sources towards the plate (73; 80), the said means for sending back the beam of illumination consisting of at least one reflecting inclined plane surface (82).

2. Structure according to Claim 1, characterized in that the said delocalized support is a radiator removing the heat (21), common to the sources of the said set of optical sources.

3. Structure according to Claim 1, characterized in that the support (81) equipped with the optical sources (12), the means (82) for sending back the beam of illumination, and the plate (73, 80) form a rigid assembly, the said assembly interacting with a pair of reflectors (87, 88) forming a laser cavity.

4. Structure according to Claim 3, characterized in that it interacts with a control source and/or a laser diode (41) for longitudinal pumping.

5. Structure according to one of Claims 1 to 4, characterized in that it interacts, on the one hand, with a pair of reflectors (87, 88) forming a pumping cavity, and, on the other hand, with means (86) for sending back the beam (84) coming from the said cavity into the plate, in at least a second pass (85).

6. Structure according to any one of Claims 1 to 5, characterized in that it consists of two assemblies mounted side by side, each assembly being formed by the said support (81) equipped with the optical sources (12), by reflecting means (82) for sending back the optical beam, and by the plate (80).

7. Structure according to Claim 6, characterized in that the first assembly forms an oscillator, and the second assembly forms an amplifier.

8. Structure according to Claim 6, characterized in that the two assemblies interact with the same plate (80), so as to form an oscillator with symmetric pumping.

9. Structure according to Claim 3 and any one of Claims 4 to 8, characterized in that it comprises means for translative displacement (72) of the said rigid assembly with respect to the pumping cavity (75, 76), substantially in the plane of the plate (73, 80).

10. Structure according to Claim 9, characterized in that the said movable unit comprises means for generating a hydrodynamic cooling flow in the region of the plate (73, 80).

11. Structure according to Claim 10, characterized in that the said plate is mounted integral with the said movable unit.

12. Structure according to any one of Claims 1 to 11, characterized in that the said coherent optical sources (12) consist of laser diodes.

13. Structure according to any one of Claims 1 to 12, characterized in that the said reflecting means for sending back the beam of illumination from the said set of delocalized optical sources towards the plate consist of a mirror with a dielectric and/or metallic coating.
